# EUROPEAN PATENT APPLICATION

(11) **EP 1 575 004 A1**
(43) Date of publication of application: **14.09.2005**
(21) Application number: 04075705.6
(22) Date of filing: 08.03.2004
(51) Int. Cl.: G07F 7/10, G07C 9/00

(54) **Biometric credit card**

(71) Applicant: Scandinavian Ecotechnologies A/S, 1432 Kobenhavn K (DK)
(72) Inventor: Nordentoft, Torsten, 147 000 Praha 4 Prague (CZ); Lastein, Susanne H., 6670 Holsted (DK); Skern, Bjorn, 75 018 Paris (FR); Andersen, Per Birger, 75 116 Paris (FR)
(74) Representative: Elmeros, Claus

(57) **Abstract**

The present invention relates to a credit card comprising a card body, which comprises fingerprint reading means providing fingerprint signals representative of at least one fingerprint from a card user, when at least one finger of said user is pressed against said fingerprint reading means. Said card body further comprises data carrier means holding at least card owner fingerprint data and secured data, and fingerprint authentication means for activating said secured data. The card body further comprises an electrical power supply delivering electrical current to at least said fingerprint reading means. Accordingly, there is no need for an external electrical power supply, and thus the existing standard card reading systems, such as ID-card readers, money transfer machines such as ATM's and the like may be used in conjunction with said credit card. Thus, investments into new standard reader systems are not necessary in order to improve the security of the secured data carried by the credit card. A complete and self-contained automated authentication process is conducted prior to communication concerning said secured data being established between said credit card and any of the existing ATM's on the market today, irrespective of type (automated or manually operated), manufacturer, version, or geographical position of said ATM and of credit card use.

## Description

The present invention relates to a credit card comprising a card body, which comprises fingerprint reading means providing fingerprint signals representative of at least one fingerprint from a card user, when at least one finger of said user is pressed against said fingerprint reading means, data carrier means including fingerprint data and secured data, and fingerprint authentication means for controlling activation of said secured data.

Credit cards in the terms of the present invention comprise any card provided with data carrier means carrying data to be secured for card owner use only, i.e. smart cards where the data is stored in a chip, magnetic strip cards where the data is stored in a magnetic strip, etc. for different uses, such as ID-cards, or cards carrying information for money transfers, such as automated teller machines (ATM's) like cash teller machines or automated payment systems, either stationary or portable, or reading devices for Internet commerce and the like.

Plastic cards have gained great popularity in the last decades as a medium by which purchase money is paid and business transacted without the necessity of carrying cash or enduring a long term escrow or other means for transferring title or securing payment of cash. With the popularity and ready acceptance of credit cards in the business world, the use thereof by unscrupulous persons to make unauthorized transaction has become a serious problem costing the consumers millions of dollars annually. As the demand for such cards has risen amongst card thieves, counter-feiters and other illegal uses, the demand for improperly obtained cards market has skyrocketed thus creating an extremely high incentive for these individuals to succumb to temptation.

Since ID-cards carry sensitive data concerning an individual owner, these cards have also developed into carrying data to be secured from individuals having intent to misuse said data.

Such credit cards with sensitive data requiring personal identification are relatively easy to copy or misuse. There have been many efforts in the past to deal with the problem of further securing said credit cards, including coding thereof for check at the point of purchase to determine if the card may be a stolen card.

One effort has concentrated on assigning credit cards with individual multi-digit ID code numbers, e.g. a Personal Identification Number, PIN, which the card user must keep secret and use at ID-code number checking ATM's. A credit card user carrying several credit cards from different credit card providers will in such cases have to remember and learn by heart several ID-code numbers, which is often difficult, especially if the user is carrying many such cards. As a consequence and contrary to credit card provider advice, some users noted their ID-code numbers in the vicinity of their credit cards, often in pockets or in the wallet carrying the credit cards.

If a credit card thief has gained access to both a credit card and the corresponding ID-code number, e.g. by stealing a wallet containing such effects, these provide easy access to cash in ATM's or commodities in ware houses and shops, often even before the owner of the credit card have time to cancel his or hers credit cards, or the cards may provide the thief access to personal information and services not intended for him/her.

In another effort, EP 1 326 196 A1 discloses a smart card for use in conjunction with a security portal, such as a transit portal or parking facility for performing authentication check for authorized passage. Finger print pattern sensors on the card generate print pattern signals, which are checked against authentic versions stored in a memory in the card, using a processor located on the card, and the result of this is communicated with the associated external security portal.

US patent No. 6,325,285 discloses a smart card with an integrated fingerprint reader, a CPU, and a memory in order to perform verification of the card user and based on this verification to grant access to secured data on said card.

A drawback is such cards requires an external system, an ATM or the like, which is specially adapted to communicate with said card in order to activate it in the ATM. Moreover, such biometric cards with secured data stored on a magnetic strip are not suitable for automatic payment systems requiring fast transfer of the credit card through a card reader, e.g. portable devices, because there is not enough time for an authentication of the card during communication with the card reader.

It is therefore an object of the present invention to provide a fingerprint authenticating credit card, which improves the security of the secured data being carried by the said card by performing an of any external system independent fingerprint authentication and which credit card does not require any changes in the existing card reading devices, such as ATM's and the like, and as such may be used directly with these.

These objects are achieved by a credit card of the initially mentioned kind, wherein the card body further comprises an electrical power supply delivering electrical current to at least said fingerprint reading means.

By a credit card according to the present invention there is no need for an external electrical power supply, and thus the existing standard systems, such as ID-card readers and money transfer readers, may be used in conjunction with said credit card, i.e. investments in new standard reader systems are not necessary in order to improve the security of the data carried by the credit card. A major advantage of said credit card according to the present invention is accordingly the fact that a complete and self-contained automated authentication process is performed prior to communication concerning said secured data being established between said credit card and any of the existing ATM's on the market today, irrespective of type (automated or manually operated), manufacturer, version, or geographical position of said ATM, and of credit card use.

In one embodiment, fingerprint authentication means control activation of said secured data based on authentication of the fingerprint signals by comparing these with said card owner fingerprint data, if the comparison is a match, then said secured data is activated; else said secured data is not activated. One advantage provided by this embodiment includes a realisation of such a credit card according to the present invention may be secured without the need for an ID-code number used in conjunction with ATM's and the like. The authentication is performed on the card, independently from any external device and may provide further security to said credit card according to the present invention. Of course, combining an authentication on-the-card and an ID-code number check may further increase the security around the secured data.

In another embodiment, said credit card further comprises activation indicator means for indicating the secured data activation status. One advantage of this embodiment being the card user is given the possibility to check, whether the fingerprint authentication means provided on the credit card according to the present invention have activated said secured data, before communication is attempted to be established between the credit card and a card reader device, e.g. drawn through an automatic payment device reader. Time is not thus not wasted attempting to insert a non-activated credit card into an ATM or the like, resulting in communication failure.

In a further embodiment, activation of said secured data is maintained over a predetermined time period. One advantage provided by this embodiment includes the card user not being required to press his/her fingers against the fingerprint reader during the time period where secured data is being communicated between the card and the read device of an external system. This enables the card to be inserted into e.g. an ATM, which operation requires the card user to let go of the credit card during said communication time period.

In yet another embodiment, said electrical power supply comprises at least one battery. Advantages comprise conventional flat batteries are economical in use, and simple to implement in a credit card according to the present invention. Further, using batteries limits the useable life time period, which for some uses of such a credit card is an advantage in order to control the life time period of the card or the number of card uses.

In still a further embodiment, said electrical power supply comprises at least one rechargeable battery. One advantage includes said credit card according to the present invention being useable for extended periods of time.

In yet another further embodiment, said electrical power supply further comprises recharging means for said rechargeable battery. One advantage being a credit card according to said embodiment is entirely power self-sufficient.

In still a further embodiment, said recharging means for said rechargeable battery comprise a solar cell arrangement. One advantage being the solar cells may be provided on a surface of the credit card being subjected to light before and/or during the communication operation between the secured data and the external system.

In a further embodiment, said card body further comprises power supply status indicator means. One advantage being the information of a failing power supply is available to the card user on the spot without the use of external means. Thus, the possibility of a power failure for the credit card according to the present invention to stop operating is kept to a minimum.

In a further embodiment, said data carrier means include a first data storage for holding card owner fingerprint data, and a second data storage for holding secured data. In this way, said data is kept separated for added security and further said data storages may be conventional data storage means, keeping down production expense.

In further embodiments, said second data storage is a magnetic strip or a smart card chip. An advantage of this being said second data storage are conventional data storage means, which keep down credit card production expenses and ease the credit card communication with existing external reading devices in an ATM or the like.

In a further embodiment, said fingerprint reading means comprise a plurality of finger print reading systems. Hereby is provided a possibility of selecting a specific finger print reading system for activation of an associated set of secured data.

The credit card according to the present invention will now be described, by way of example, with reference to the diagrammatic drawings in which
· Fig. 1 is a block diagram of a credit card according to one embodiment of the present invention,
· Fig. 2 shows one embodiment of a credit card according to the present invention,
· Fig. 3 shows another embodiment of a credit card according to the present invention, and
· Fig. 4 shows a further embodiment of a credit card according to the present invention.

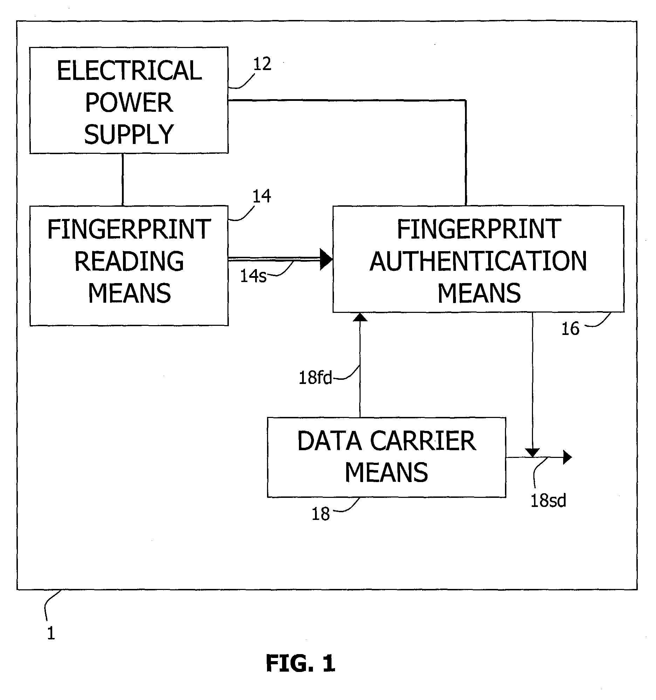

Fig. 1 shows a diagrammatic block diagram for a credit card according to one embodiment of the present invention. Said credit card comprises a card body 1, an on-the-card electrical power supply 12, fingerprint reading means 14, fingerprint authentication means 16, and data carrier means 18.

Said electrical power supply 12 is delivering electrical current to at least the fingerprint reading means 14 and in the embodiment shown in Fig. 1 also to fingerprint authentication means 16 using some conventional electrical connection (solid line). Obviously, some other or all electrical components of said credit card may be provided with electrical power from said power supply 12. Said fingerprint reading means 14 provide fingerprint signals 14s to the fingerprint authentication means 16 in order to enable a comparison between said fingerprint signals 14a and card owner fingerprint data 18fd pre-stored in said data carrier means 18 for activating secured data 18sd likewise pre-stored in said data carrier means 18.

Said electrical power supply 12 advantageously comprises one or more rechargeable and/or non-rechargeable batteries. The power supply 12 preferably further comprise electrical connections to the various means provided on the card body, and, in the case of rechargeable batteries being provided, preferably recharging means, e.g. terminals for connection to an externally provided battery charging system or, advantageously, solar cells provided on said card body, said recharging means in electrical communication with said rechargeable battery or batteries.

Present day non-rechargeable batteries are compact, both in power and in size, and one or more batteries provide ample power for several fingerprint readings and accompanying authentications for communication operations between a credit card according to the present invention and a card reader device. In some uses for such a credit card it may be preferred to limit the battery life time period in which such card may be active, e.g. limiting the use of a card to two authentications in a user test trial of such a novel card.

Fingerprint reading means 14 may comprise any available conventional device, preferably a small and flat finger print reading system provided on one or two sides of the card body 1, which system may comprise some or all of one or more biosensors, a fingerprint image taker, a fingerprint data storage, a fingerprint data analyzer, or the like. The fingerprint signals 14s provided to the fingerprint authentication means 16 may comprise signals encompassing several data, e.g. analyzed or raw fingerprint image data, heat sensor data, etc. Said fingerprint reading means 14 is thus able to provide fingerprint signals 14s based on one or more fingers being pressed against any biosensor provided on the card.

The data carrier means 18 comprise one or more storage devices, i.e. at least one or more memory units for storing card owner fingerprint data and one or more memory units for storing secured data. Said one memory unit may be the same unit storing all data, or two or more units storing each their type of data, or a combination of these.

Card owner fingerprint data 18fd is data concerning one or more fingers of an authorized card owner, said data preferably being pre-stored on the credit card according to the present invention. Said pre-storage may be performed in any conventional way, e.g. by a card owner fingerprint storing operation certified by the credit card provider. Memory units used for storing card owner fingerprint data may take the form of RAM, ROM, PROM's, EEPROMS, smart card chips, magnetic strips or the like.

An added security may be provided in the fact that storing and thus registration of fingerprints may be performed only on a limited number of credit cards, preferably only one credit card. Thus it is possible to avoid having to register fingerprints outside the credit card in question, and thus the possibility of an unauthorized person stealing a set of fingerprints data to match a stolen card is virtually non-existing.

The term card owner should be understood as comprising one or more persons, all of which have their respective fingerprint data sets pre-stored in the data carrier means on the credit card. This allows more than one person may activate the secured data held by a credit card.

Secured data 18sd comprises one or more sets of secured data, each set of secured data containing e.g. personal data or bank teller information, such as card number, or the like, which data is used to gain access to personal services either cash, automatic payment of commodities, or the like. Memory units used for storing secured data often take the form of smart card chips or magnetic strips, but other may be used.

The fingerprint authentication means 16 comprise means for authenticating fingerprint signals 14s provided by the fingerprint reading means 14, where said authentication preferably comprise a comparison procedure using card owner data pre-stored in said data carrier means 18, and a secured data activation procedure for activating said secured data pre-stored in said data carrier means 18, but may include further or other authentication steps e.g. comprising user/card provider selection options.

Said fingerprint authentication means 16 may advantageously comprise a processor capable of performing the authentication procedures. Said processor may be dedicated for said authentication or may also be incorporated in a smart card chip for said secured data.

Preferably, said activation of the secured data may be maintained for a predetermined time period. Examples showing the applicability of this embodiment encompass activation of the secured data during the time period in which one or more fingers are pressed against the fingerprint reading means, e.g. during a swift passing of the credit card through a reading device in an automated payment device, or alternatively during the time period stretching itself from the moment in which the card owner has released the credit card into a ATM, and the moment, when the ATM has completed reading of the secured data provided on the credit card. A major advantage of said credit card according to the present invention is the fact that a complete and self-contained automated authentication process is performed prior to communication being established between said credit card and any of the existing ATM's on the market today, irrespective of type (automated or manually operated), manufacturer, version, or geographical position of said ATM.

Preferably, said secured data is activated for a precisely set predetermined time period, allowing for just enough time for communication to be established and completed. If said time period is chosen too long, this may provide a card thief ample time to perform his/her own transaction, resulting in lower security for said secured data. If the time period is set too short, there may not be enough time to complete communication between the credit card and the ATM or the like.

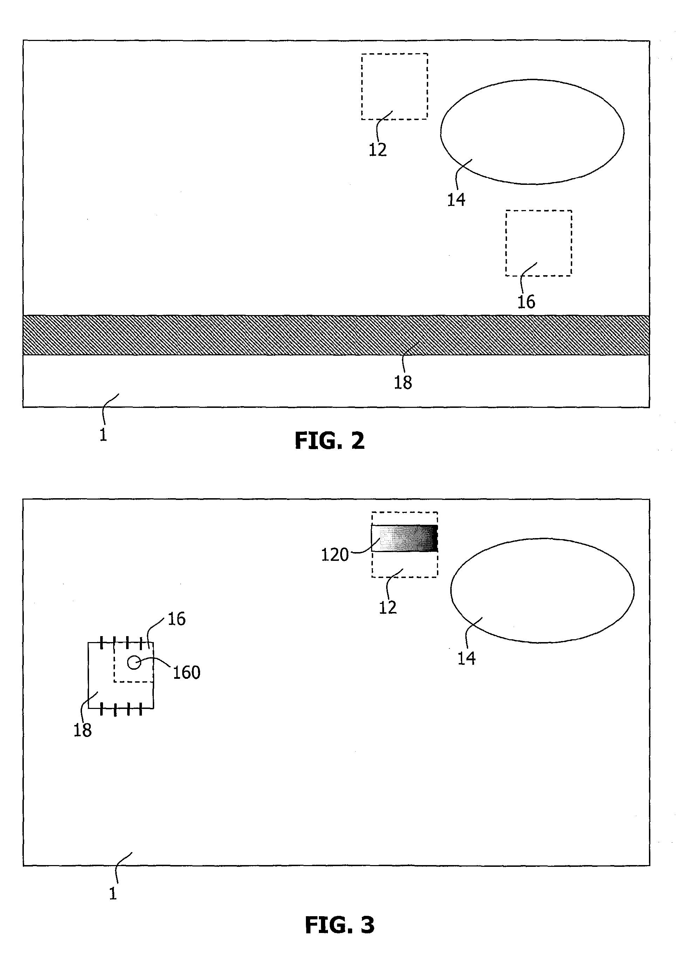

In Fig. 2 is shown one surface of a credit card according to another embodiment of the present invention comprising a card body 1 on one side provided with a magnetic strip as data carrier means 18, and provided with an electrical power supply 12 such as a rechargeable or non-rechargeable battery.

Advantageously, a credit card according to the present invention may also comprise activation indicator means for indicating the secured data activation status, i.e. whether or not the secured data provided on such a card is in a state of activation. In Fig. 3 is shown such an activation indicator means 160 in this embodiment comprising a green or green/red LED, where green light indicates activation of the secured data pre-stored on said data carrier means and no green or red light indicates no activation of said secured data. The advantage of such a means is the card user may assure him or her self of the state of activation before he or she utilises the credit card according to the present invention in a reading device in order to avoid futile attempts for the reading device to communicate with the data carrier means provided on the card, if no activation has been initiated due to fingerprint mismatch, low battery power or the like.

Said activation indication means 160 may advantageously for power consumption reasons be turned off when the card is not being used, i.e. only during a short time period after one or more fingers have been placed on the fingerprint reading means.

Fig. 3 further shows a credit card provided with power supply status indicator means 120, in this embodiment consisting of an electrically conductive colour changing strip, the changing of the colour indicating battery power status. This is especially of use, when rechargeable batteries are provided on the credit card to indicate for a card user when it is time to charge said batteries, but may also be used to indicate card wear status for a short life time use.

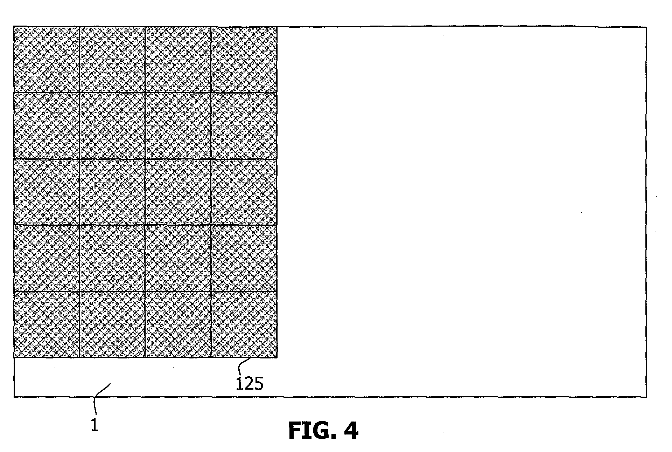

Fig. 4 shows a further embodiment of the credit card according to the present invention, in which one side of the card body 1 partly is provided with solar cells 125 for recharging of rechargeable batteries being provided on said credit card. The exact type, arrangement, size, number and other characteristics of said solar cells may vary, but these preferably match the recharging need of said batteries for at least one authentication being performed by the card and for the optional associated indications to the card user.

Said recharging means may of course assume other forms, e.g. recharging terminals being provided on said credit card for connection to externally provided charging means, such as corresponding charging terminals on a conventional battery charger.

In use, an owner of a credit card according to the present invention takes hold of said credit card, presses one or more fingers against the fingerprint reading means, and the fingerprint authentication means provided on the credit card activate secured data provided on said credit card only if the fingerprint authentication performed on the card matches against card owner fingerprint data also provided on the credit card. If a fingerprint match is established, secured data pre-stored on the card is activated by the fingerprint authentication means and said secured data may be read from any reading device of an ATM or the like.

The authentication procedure being done on the card and independently of any reading device or other external apparatus is possible only because the power supply for this procedure is provided on the credit card itself. An independent, on-the-card, and substantially self contained power supply is provided with a credit card according to the present invention.

The exact configuration on the credit card of the different means provided on said card is not important and is only shown in the figures as way of example. One may prefer an integration of all means, ultimately into one fingerprint reading, authenticating, data carrying, power supplying device, such as an integrated circuit provided on said card, said integration being advantageous for cost reasons.

By the invention it is realised that by providing the credit card with a plurality of fingerprint reading systems enables a multi-function card. A card owner may select one system amongst the plurality of fingerprint reading systems by pressing one or more fingers against said selected system. The selection thus activates an associated set of secured data, which optionally may be provided from the same provider, or different card providers. As an example, selection of a first fingerprint reading system may e.g. activate a first set of secured data concerning money access data; selection of a second fingerprint reading system may activate a second set of secured data concerning personal data. Accordingly, one advantage comprises as noted above optionally dispensing with a dedicated ID code number for each secured data set to be activated, which mitigates the need for a card user to remember several ID code numbers, one for each card in possession.

## Claims

1. A credit card comprising a card body, which comprises fingerprint reading means providing fingerprint signals representative of at least one fingerprint from a card user, when at least one finger of said user is pressed against said fingerprint reading means, data carrier means holding at least card owner fingerprint data and secured data, fingerprint authentication means for activating said secured data, **characterized in that** the card body further comprises an electrical power supply delivering electrical current to at least said fingerprint reading means.

2. A credit card according to claim 1, in which said fingerprint authentication means control activation of said secured data based on authentication of the fingerprint signals by comparing these with said card owner fingerprint data, if the comparison is a match, then said secured data is activated, else said secured data is not activated.

3. A credit card according to claim 1 or 2, further comprising activation indicator means for indicating the secured data activation status.

4. A credit card according to any of the preceding claims, in which activation of said secured data is maintained over a predetermined time period.

5. A credit card according to any of the preceding claims, in which said electrical power supply comprises at least one battery.

6. A credit card according to any of the preceding claims, in which said electrical power supply comprises at least one rechargeable battery.

7. A credit card according to any of the preceding claims, in which said electrical power supply further comprises recharging means for said rechargeable battery.

8. A credit card according to claim 7, in which the recharging means for said at least one rechargeable battery comprise a solar cell arrangement.

9. A credit card according to any of the preceding claims, in which said card body further comprises power supply status indicator means.

10. A credit card according to any of the preceding claims, in which said data carrier means include a first data storage for holding card owner fingerprint data, and a second data storage for holding secured data.

11. A credit card according to claim 10, in which said second data storage is a magnetic strip.

12. A credit card according to claim 10, in which said second data storage is a smart card chip.

13. A credit card according to any of the preceding claims, in which said fingerprint reading means comprise a plurality of finger print reading systems.
